# FASCICULE DE BREVET EUROPEEN

(11) **EP 0 652 154 B1**
(45) Date de publication et mention de la délivrance du brevet: **15.07.1998**
(21) Numéro de dépôt: 94402530.3
(22) Date de dépôt: 09.11.1994
(51) Int. Cl.: B64C 11/44, F01D 7/00

(54) **Procédé et dispositif de variation du pas des pales d'un rotor**
Verfahren und Vorrichtung zur Verstellung der Blattanstellwinkel eines Rotors
Method and device for varying pitch of rotor blades

(30) Priorité: 10.11.1993 FR 9313409
(43) Date de publication de la demande: 10.05.1995
(73) Titulaire: Hispano-Suiza, 75015 Paris (FR)
(72) Inventeur: Girard, Françis, F-78110 Viroflay (FR)
(74) Mandataire: Berrou, Paul

(56) Documents cités:
- FR-A- 890 641
- US-A- 5 183 387
- US-A- 5 282 719

## Description

L'invention concerne un procédé et un dispositif de variation de l'orientation des pales d'un rotor. L'invention s'applique notamment aux moteurs à turbine à gaz ou turboréacteurs munis d'une soufflante comprenant une pluralité d'aubes pouvant pivoter autour de leur axe longitudinal de façon à pouvoir régler leur pas.

Il est particulièrement intéressant d'adapter le pas des aubes de la soufflante d'un moteur aux conditions variables d'un vol de manière à obtenir des performances optimum du moteur et l'inversion de sa poussée. En marche, le rendement énergétique du moteur peut être rendu optimum en faisant varier le pas des aubes de façon à ce qu'il corresponde à des conditions spécifiques de fonctionnement.

Les dispositifs de variation du pas des aubes comportent généralement des actionneurs hydrauliques entraînant des engrenages pour placer les aubes dans la position désirée. Ces dispositifs sont complexes, encombrants et présentent des problèmes de fiabilité.

Il existe également des systèmes électriques d'entraînement pour faire varier le pas des pales d'un rotor. Ces systèmes utilisent généralement des moteurs à courant continu mis en marche et arrêtés par des relais alimentés par le bus d'alimentation à courant continu de l'avion, et comportent des moyens de transmission de puissance électrique utilisant des contacts électriques entre un collecteur et des balais soumis à usure et posant des problèmes de fiabilité.

Le but de l'invention est de pallier les inconvénients des dispositifs connus et de réaliser un dispositif de variation du pas des pales d'un rotor qui soit simple, fiable, léger et de faible encombrement.

Pour cela le dispositif de variation de pas comporte un moteur électrique dont le stator est fixe et dont le rotor ne possède aucune liaison électrique avec le stator et est solidaire d'une roue dentée, des secteurs de pignon solidaires du pied de chaque aube et engrenés à la roue dentée, des moyens de verrouillage du pied des aubes positionnés par un actionneur électromécanique solidaire de l'arbre du réacteur et alimenté par l'intermédiaire d'un transformateur tournant.

Selon l'invention, le dispositif de variation du pas des aubes d'un rotor d'une turbomachine, les aubes étant montées sur un disque entraîné en rotation par un arbre de la turbomachine et ayant chacune un pied pouvant pivoter autour d'un axe longitudinal de l'aube, est caractérisé en ce qu'il comporte des moyens d'actionnement du changement du pas des aubes et des moyens de verrouillage du pied des aubes, les moyens d'actionnement comportant un moteur électrique ayant un stator bobiné fixe et un rotor fixé sur l'arbre de la turbomachine, le rotor ne possédant aucune liaison électrique avec le stator et étant solidaire d'une roue dentée sur laquelle sont engrenés des secteurs de pignons solidaires du pied de chaque aube, les moyens de verrouillage comportant un actionneur électromécanique solidaire de l'arbre et alimenté en énergie électrique par l'intermédiaire d'un transformateur tournant.
L'invention concerne également un procédé de commande du dispositif de variation du pas des aubes d'un rotor d'une turbomachine selon l'une quelconque des revendications précédentes, caractérisé en ce que, pour passer d'une position de verrouillage sur une première butée vers une position de verrouillage sur une deuxième butée, il consiste :
- à effectuer une mesure de la vitesse de rotation de l'arbre de la turbomachine et à contrôler la position du verrou,
- à alimenter le moteur électrique,
- à créer entre le stator et le rotor du moteur électrique, un champ magnétique tournant à une vitesse différente de celle de l'arbre , et impliquant un moment magnétique capable de bloquer les aubes sur la première butée afin de faciliter le déverrouillage et de maintenir les aubes dans la même position pendant la manoeuvre de déverrouillage,
- à alimenter l'actionneur du verrou pour libérer le pied des aubes,
- à modifier la vitesse du champ tournant de manière à inverser le sens du moment magnétique et provoquer la rotation des aubes autour de leur axe longitudinal de la première butée jusqu'à la deuxième butée,
- à couper l'alimentation du système de verrouillage pour verrouiller le pied des aubes sur la deuxième butée,
- à couper l'alimentation du moteur électrique.
D'autres particularités et avantages de l'invention apparaîtront clairement dans la suite de la description donnée à titre d'exemple nonlimitatif et faite en regard des figures annexées qui représentent :
- la figure 1 : une coupe partielle axiale de l'avant d'un turboréacteur comportant un dispositif de variation du pas des aubes d'une soufflante, selon l'invention ;
- les figures 2a, 2b, 2c, une vue en perspective et deux vues en coupe du dispositif d'actionnement du changement du pas des aubes, selon l'invention ;
- la figure 3, une vue schématique d'un exemple de réalisation de butées mobiles, selon l'invention ;
- les figures 4a et 4b, deux vues schématiques montrant respectivement la disposition du système de verrouillage des aubes par rapport au disque aubagé et le mécanisme de verrouillage du pied des aubes, selon l'invention ;
- la figure 5, un premier exemple de réalisation d'un dispositif électrique de commande et de contrôle d'un actionneur électromécanique, selon l'invention ;
- la figure 6, un deuxième exemple de réalisation d'un dispositif électrique de commande et de contrôle d'un actionneur électromécanique, selon l'invention ;
- la figure 7, un exemple comparatif entre les amplitudes du courant d'alimentation de l'actionneur électromécanique pendant les périodes de verrouillage et de déverrouillage ;
- les figures 8a, 8b, 8c, trois exemples de transformateurs tournants, selon l'invention ;
- la figure 9, un exemple de diagramme de fonctionnement du dispositif de variation du pas des aubes lors d'un passage d'une phase de jet direct vers une phase de jet inversé.
- la figure 10, un exemple de diagramme de fonctionnement du dispositif de variation du pas des aubes lors d'un passage d'une phase de décollage vers une phase de croisière ;

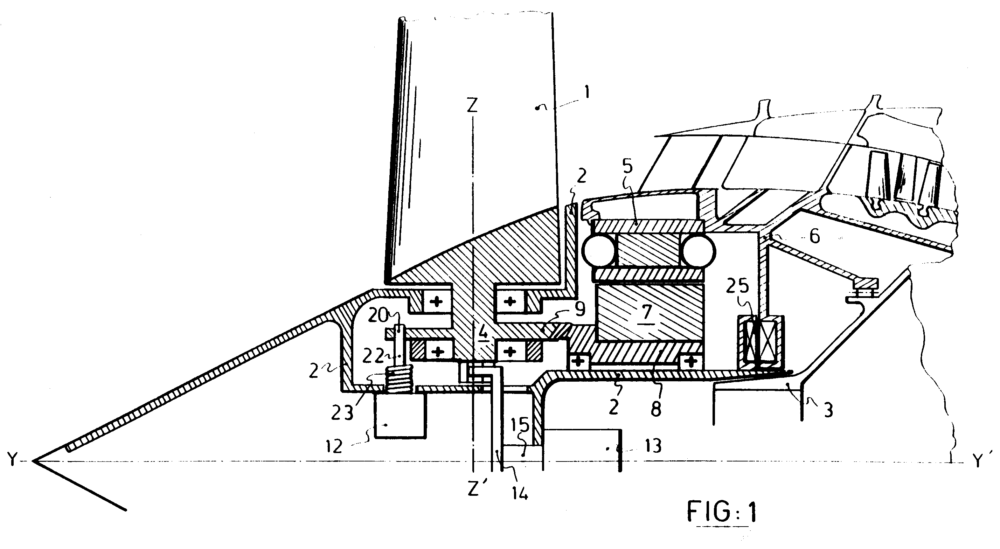

La figure 1 représente une coupe partielle axiale de l'avant d'un turboréacteur comportant un dispositif de variation du pas des pales d'une soufflante, selon l'invention. Le turboréacteur comporte une soufflante comprenant une pluralité d'aubes 1 montées sur un disque entraîné en rotation par l'arbre principal 2 du turboréacteur, cet arbre 2 étant lui-même entraîné par un générateur de gaz non représenté et par l'intermédiaire d'un réducteur de vitesse 3. Chaque aube de la soufflante comporte un pied 4 pouvant pivoter autour de son axe longitudinal ZZ' de manière à faire varier le pas de l'aube.

Le dispositif de variation du pas des aubes comporte des moyens d'actionnement pour modifier le pas des aubes et des moyens de verrouillage du pied des aubes dans une position déterminée.

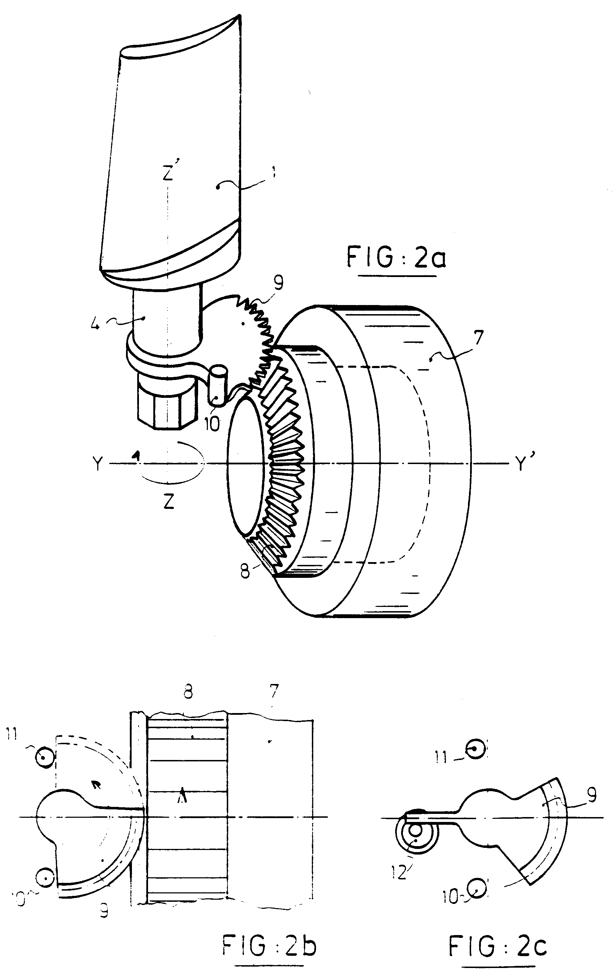

Les moyens d'actionnement du changement du pas des aubes sont représentés schématiquement sur les figures 2a, 2b et 2c. Ils comportent un moteur électrique ayant un stator bobiné 5 solidaire de la structure fixe 6 du turboréacteur et un rotor 7 solidaire d'une roue dentée 8 montée sur roulements et entourant l'arbre principal 2. La roue dentée 8 est engrenée à des secteurs de pignon 9 fixés sur le pied 4 de chaque aube 1 de la soufflante, et permet la rotation des aubes autour de leur axe longitudinal ZZ'. L'angle de rotation maximal de l'ensemble constitué par un pignon 9, la roue dentée 8, et le rotor 7 du moteur électrique est délimité par deux butées fixes 10, 11, tel que représenté schématiquement sur la figure 2b. Ces deux butées fixes correspondent à un fonctionnement du turboréacteur en jet direct ou en jet inversé. Pour obtenir une ou plusieurs positions d'aube intermédiaires, des butées mobiles 12, par exemple des électro-aimants, peuvent être prévus en complément des butées fixes, tel que représenté sur la figure 2c.

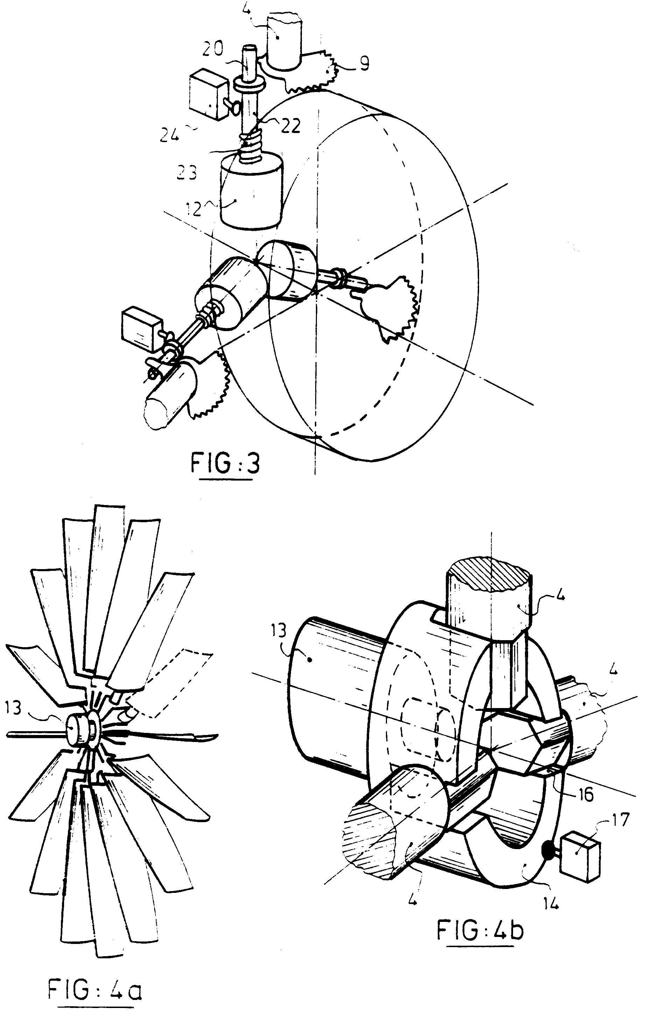

La figure 3 représente un exemple schématique de réalisation de butées mobiles, selon l'invention.

Pour obtenir plusieurs positions angulaires différentes, des butées supplémentaires peuvent être disposées sur le trajet angulaire d'un secteur de pignon 9 associé à un pied d'aube 4, entre les deux butées fixes 10, 11. Notamment, il est particulièrement intéressant de disposer de trois positions angulaires différentes pour obtenir une première position d'aube pour le décollage, une deuxième position pour le vol de croisière et une troisième position pour l'inversion de jet.

Chaque butée mobile 20 peut être réalisée au moyen d'un électro-aimant 12. l'électro aimant 12 comporte dans un boîtier solidaire de l'arbre 2 du turboréacteur, une bobine à l'intérieur de laquelle une tige métallique 22 mobile est susceptible de se déplacer en translation sous l'action d'un champ magnétique. Pour augmenter la fiabilité et la sécurité du dispositif de variation du pas des aubes, un ressort de rappel 23 est disposé autour de la tige métallique 22 de manière à maintenir la tige en position sortie, dite position de fin de course, lorsque l'électro-aimant 12 n'est pas alimenté. La position de la butée mobile est contrôlée automatiquement et en permanence par l'intermédiaire d'un détecteur de position 24, par exemple du type contact de fin de course.

Les pieds d'aubes 4 étant tenus mécaniquement par la roue dentée par l'intermédiaire des secteurs de pignon 9, pour obtenir une position d'aube intermédiaire il suffit de disposer une butée mobile sur une seule aube pour que toutes les aubes se positionnent dans cette position intermédiaire.

Cependant, pour augmenter la fiabilité du dispositif d'orientation des aubes, il est avantageux de disposer, pour une position intermédiaire prédéterminée, une butée mobile sur plusieurs aubes différentes. Notamment, sur la figure 4, trois aubes régulièrement espacées sont munies d'une butée mobile pour une position intermédiaire déterminée.

De la même façon, il est possible d'obtenir plusieurs positions intermédiaires en disposant plusieurs butées mobiles à des positions angulaires différentes par rapport au secteur de pignon 9. Les butées mobiles disposées à des positions angulaires différentes par rapport aux secteurs de pignon ne sont pas nécessairement placées sur un même pied d'aube.

Les électro-aimants 12 d'actionnement des butées mobiles 20 peuvent être alimentés, sans contact mécanique, par l'intermédiaire d'un transformateur tournant.

Le moteur électrique utilisé peut être du type à aimant permanent ou asynchrone de manière à éliminer les problèmes de frottement et d'usure entre la partie tournante et la partie statique. le stator bobiné est fixe et est alimenté en courant alternatif par des moyens connus non représentés, tel que par exemple, un alternateur ou une génératrice associé à un redresseur et à un onduleur, de façon à obtenir un courant alternatif ayant une fréquence contrôlée. Dans le cas d'un rotor à un aimant permanent, ce rotor peut éventuellement comporter un bobinage en circuit fermé de manière à augmenter la puissance du moteur et à en diminuer les dimensions, ce bobinage n'étant pas en liaison avec le bobinage statorique.

les moyens de verrouillage des aubes sont représentés schématiquement sur les figures 4a et 4b. Ils comportent un actionneur électromécanique 13, par exemple un électro-aimant, associé à un verrou 14 destiné à maintenir le pied 4 des aubes dans une position déterminée. Le pied des aubes est usiné de manière à présenter plusieurs faces correspondant à différentes positions possibles prédéterminées. L'actionneur électromécanique 13 comporte dans un boîtier solidaire de l'arbre 2 du réacteur, une bobine à l'intérieur de laquelle est disposée une tige métallique 15 mobile en translation. Le verrou 14 est solidaire de la tige 15, lorsque la tige se déplace en translation, elle entraîne le verrou 14 dans son déplacement. Pour maintenir le pied des aubes dans une position déterminée, le verrou 14 comporte des encoches 16 en correspondance avec le pied des aubes. En position de verrouillage, les pieds des aubes sont bloqués dans les encoches du verrou. Pour augmenter la sécurité du système de verrouillage, la position du verrou est contrôlé automatiquement et en permanence par l'intermédiaire d'un détecteur de position 17 par exemple du type détecteur de fin de course.

Les aubes étant toutes munies d'un secteur de pignon et les secteurs de pignon étant tous engrenés à la même roue dentée, les aubes sont toutes liées mécaniquement l'une par rapport à l'autre. par conséquent, il n'est pas nécessaire que le verrou maintienne tous les pieds d'aube, il suffit qu'une seule aube soit maintenue pour bloquer toutes les autres dans la même position.

Cependant, pour des raisons de fiabilité et de stabilité il est préférable que le verrou maintienne deux aubes diamétralement opposées ou trois aubes régulièrement espacées, comme représenté sur la figure 4b;
De la même façon que les électro-aimants 12 d'actionnement des butées mobiles 20, l'actionneur 13 est alimenté, sans contact mécanique, par l'intermédiaire d'un transformateur tournant.

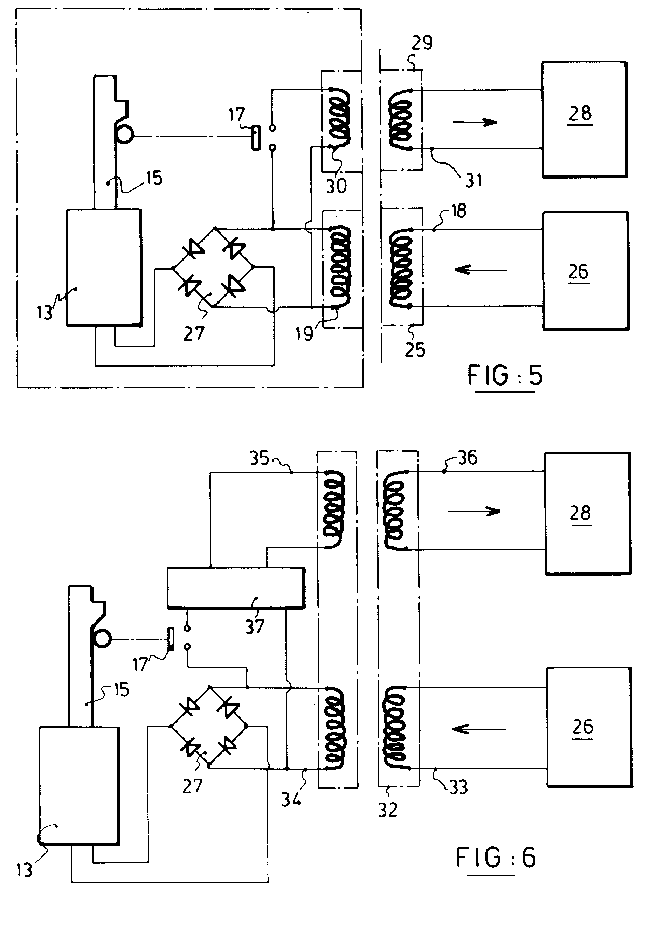

La figure 5 représente un premier exemple de dispositif électrique de commande et de contrôle d'un actionneur électromécanique, selon l'invention.

La commande de l'actionneur 13 est effectuée par l'intermédiaire d'un premier transformateur tournant 25 comportant un bobinage primaire 18 solidaire de la structure fixe du turboréacteur et un bobinage secondaire 19 fixé sur l'arbre 2 du turboréacteur. En entrée du transformateur tournant 25, le bobinage primaire 18 est connecté à un dispositif d'alimentation en énergie électrique 26. En sortie du transformateur tournant 25, le bobinage secondaire 19 transmet la puissance électrique nécessaire à la commande de l'actionneur 13 après redressement dans un pont de diodes 27. la puissance électrique de commande de l'actionneur doit être suffisamment élevée pour rompre son inertie et permettre le déplacement de la tige mobile 15.

La position de la tige mobile 15 de l'actionneur 13 est signalée par un détecteur de position 17, par exemple du type détecteur de fin de course, constituant un interrupteur électrique et transmise à un dispositif de contrôle de position 28 par l'intermédiaire d'un deuxième transformateur tournant 29. Ce deuxième transformateur tournant 29 comporte un bobinage primaire 30 fixé sur l'arbre 2 du turboréacteur et connecté aux bornes du bobinage secondaire 19 du premier transformateur tournant 25, et comporte un bobinage secondaire 31 connecté en entrée du dispositif de contrôle de position 28. Lorsque l'interrupteur du détecteur de position 17 est fermé, le deuxième transformateur tournant 29 est alimenté par l'intermédiaire du premier transformateur tournant 25 et transmet l'énergie reçue au dispositif de contrôle de position 28.
Ce premier exemple de dispositif électrique de commande et de contrôle d'un actionneur électromécanique est particulièrement bien adapté à un environnement où les contraintes en température sont importantes puisqu'il comporte très peu de composants électroniques. Cependant, la présence de deux transformateurs tournants présente l'inconvénient d'augmenter la masse et l'encombrement du dispositif de verrouillage des aubes.

La figure 6 représente un deuxième exemple de dispositif électrique de commande et de contrôle d'un actionneur électromécanique, selon l'invention.

La commande de l'actionneur 13 effectuée par l'intermédiaire d'un transformateur tournant 32 comportant deux enroulements indépendants, chaque enroulement comportant un bobinage primaire et un bobinage secondaire.
Les bobinages primaire 33 et secondaire 34 sont destinés à transmettre la puissance électrique, délivrée par un dispositif d'alimentation 26, nécessaire à la commande de l'actionneur 13, et à alimenter, au travers d'un détecteur de position 17 du type détecteur de fin de course, un oscillateur 37 à fréquence f élevée et à faible niveau par rapport à la fréquence et au niveau de la puissance électrique d'alimentation. Le signal de sortie de l'oscillateur est régulé en tension par un régulateur de tension interne non représenté. Les bobinages primaire 35 et secondaire 36 ne comportent que quelques spires et sont destinés à transmettre, à un dispositif de contrôle de position 28, le signal issu de l'oscillateur 37 dont la fréquence f est représentative de la position de l'actionneur 13.

Ce deuxième exemple de dispositif électrique de commande et de contrôle d'un actionneur électromécanique présente avantageusement une masse et un encombrement réduits puisqu'il ne comporte qu'un seul transformateur tournant pour transmettre simultanément, par des enroulements indépendants, une puissance électrique d'un ensemble fixe à un ensemble tournant et un signal électrique représentatif de la position de l'actionneur. Cependant, la présence d'un oscillateur limite son utilisation aux environnements où les variations de température correspondent à la gamme de fonctionnement de l'oscillateur.

La commande de l'actionneur est effectuée de la façon suivante.
Pendant la période de verrouillage, la tige 15 de l'actionneur 13 est dans une position de fin de course, l'interrupteur constituant le détecteur de position est ouvert et aucun signal n'est transmis vers le dispositif de contrôle 28.

Sous l'action d'une commande de déverrouillage, l'actionneur 13 est alimenté par une puissance électrique suffisamment élevée pour permettre le déplacement de la tige mobile 15. Un flux magnétique est engendré à l'intérieur de la bobine de l'actionneur 13 et sous l'action des forces magnétiques, la tige mobile 15 se déplace en translation vers une position de déverrouillage. Lors de son déplacement, la tige actionne le détecteur de position 17 qui se ferme. Un signal électrique est alors transmis au dispositif de contrôle de position 28.

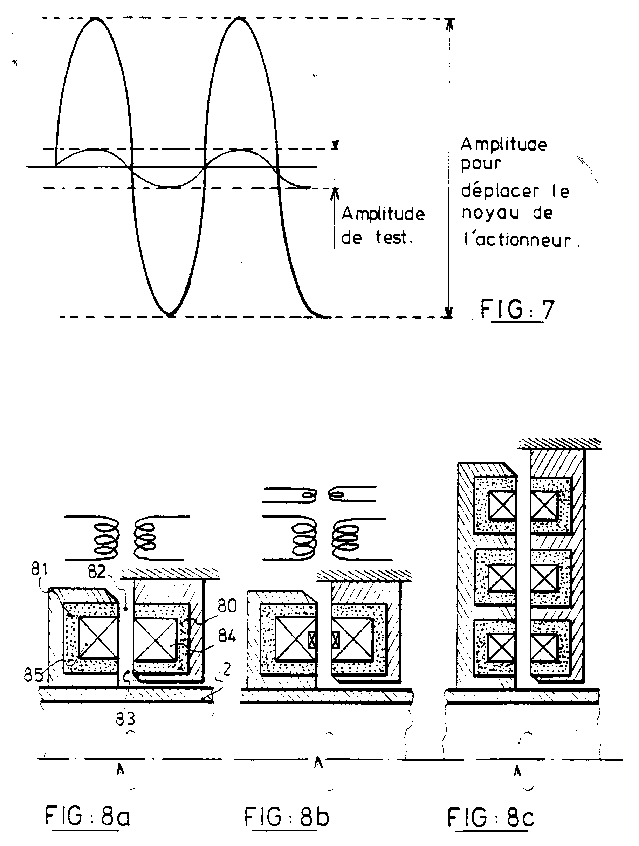

La figure 7 représente un exemple comparatif entre les amplitudes du courant d'alimentation de l'actionneur pendant les périodes de verrouillage et de déverrouillage.
Pendant la période de déverrouillage, le contrôle de la position de la tige 15 de l'actionneur est effectué par la transmission d'un signal électrique à un dispositif de contrôle de position 28, lorsque la tige est bien dans la position de déverrouillage. L'absence de transmission du signal électrique indique une panne de l'actionneur.

Pendant la période de verrouillage, le contrôle de la position de la tige 15 de l'actionneur est effectué en alimentant l'actionneur 13 par un signal électrique d'amplitude inférieure à celle nécessaire pour déplacer la tige mobile 15.

L'absence de transmission du signal électrique au dispositif de contrôle de position 28 indique un fonctionnement correct de l'actionneur.

La commande des actionneurs 12 des butées mobiles 20 est effectuée de la même façon que la commande de l'actionneur 13 de verrouillage des aubes. Par conséquent, la description précédente relative aux figures 5, 6, et 7 s'applique également pour la commande des actionneurs 12.

Les figures 8a, 8b, 8c représentent trois exemples de transformateurs tournants, selon l'invention.

Les transformateurs tournants comportent un circuit magnétique fixe 80 solidaire de la structure fixe du turboréacteur et séparé par des entrefers axiaux 82, 83 d'un circuit magnétique tournant 81. Le circuit magnétique tournant est fixé sur l'arbre 2 du turboréacteur.
Dans la configuration de la figure 8a, le transformateur tournant comporte un enroulement constitué d'un bobinage primaire fixe 84 et d'un bobinage secondaire tournant 85 permettant de transmettre sans contact, une puissance électrique d'un ensemble fixe à un ensemble tournant.

Dans la configuration de la figure 8b, le transformateur tournant comporte un premier enroulement permettant de transmettre, sans contact, une puissance électrique d'un ensemble fixe à un ensemble tournant, et un deuxième enroulement comportant quelques spires (par exemple une ou deux spires) indépendant du premier enroulement, permettant de transmettre un signal électrique.

Dans la configuration de la figure 8c, trois transformateurs tournants sont représentés. Il sont disposés les uns au dessus des autres de manière à constituer trois enroulements indépendants et isolés magnétiquement les uns des autres. Ils permettent de transmettre trois puissances électriques indépendamment les unes des autres.

D'autres configurations sont possibles. En particulier, deux transformateurs tournants sont nécessaires pour alimenter d'une part, l'actionneur 12 des butées mobiles correspondant à une même position intermédiaire des aubes de soufflante, et d'autre part, l'actionneur 13 du système de verrouillage des aubes. Ces deux transformateurs tournants comportent chacun, un enroulement pour transmettre la puissance électrique nécessaire à la commande de l'actionneur considéré et un enroulement pour transmettre un signal électrique de contrôle de la position de la tige de l'actionneur considéré.

Dans le cas où plusieurs positions intermédiaires des aubes de soufflante sont disponibles, il est nécessaire de disposer d'autant de transformateurs tournants que d'actionneurs des butées mobiles correspondantes.

Le fonctionnement du dispositif de variation du pas des aubes d'une soufflante est le suivant.
Lorsque les aubes sont dans une position déterminée en jet direct ou en jet inversé et calées sur une butée fixe ou mobile, le réducteur de vitesse 3 entraîne l'arbre 2 du turboréacteur et l'arbre 2 entraîne l'actionneur 13 du verrou 14 et les aubes 1. Les aubes sont maintenues fixes autour de leur axe longitudinal par l'intermédiaire du verrou 14 positionné par l'actionneur 13. Les aubes 1 entraînent la roue dentée 8 et le rotor 7 du moteur électrique. Le bobinage du stator 5 du moteur électrique n'est pas alimenté électriquement.

Pour modifier les conditions de fonctionnement du turboréacteur, il est procédé à la modification de la position des aubes pour les caler sur une autre butée fixe ou mobile.Il est particulièrement intéressant de disposer de trois positions d'aubes, deux positions étant affectées à deux modes de fonctionnement en jet direct, la troisième position étant affectée à un mode de fonctionnement en jet inversé.

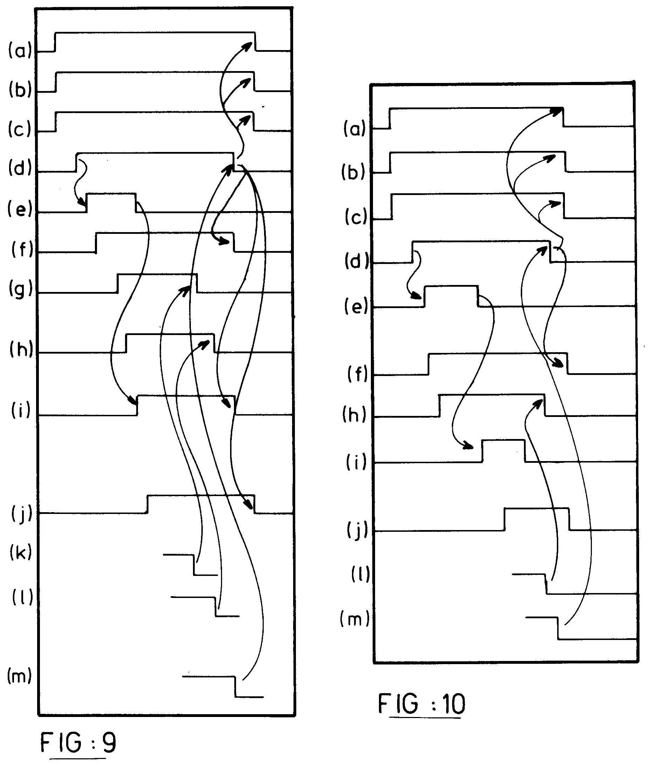

Les deux modes de fonctionnement en jet direct peuvent par exemple correspondre à une phase de décollage et une phase de croisière pour lesquelles les aubes sont respectivement calées sur une première butée fixe extrême et sur une butée mobile intermédiaire. Dans le mode de fonctionnement en jet inversé, les aubes sont calées sur une deuxième butée fixe extrême. La modification de la position des aubes s'effectue suivant le diagramme temporel représenté sur la figure 9 pour le passage d'une phase en jet direct vers une phase en jet inversé.

Le passage d'une phase en jet direct vers une phase en jet inversé est effectué par le procédé, suivant l'invention, qui consiste :
(a) à effectuer une mesure de la vitesse de rotation de l'arbre 2 du turboréacteur et à (b) vérifier la position de la butée mobile et (c) du verrou,
(d) à alimenter le moteur électrique,
(e) à créer, entre le stator et le rotor, un champ magnétique tournant à une vitesse différente de celle de l'arbre du turboréacteur et implicant un moment magnétique capable de bloquer les aubes sur la butée fixe affectée au fonctionnement en jet direct afin d'aider au déverrouillage et de maintenir les aubes dans une position de jet direct pendant la manoeuvre de déverrouillage,
(f) effectuer une mesure du moment magnétique pour vérifier que le fonctionnement du moteur électrique est correct, (g) à alimenter l'actionneur 12 de la butée mobile 20 pour que celle-ci se rétracte,
(h) à alimenter l'actionneur 13 du verrou 14 pour que la tige 15 de l'actionneur 13 se rétracte et que le verrou 14 libère le pied 4 des aubes 1,
(i) à modifier la vitesse du champ tournant de manière à inverser le sens du moment magnétique et provoquer la rotation des aubes autour de leur axe longitudinal de la position de jet direct jusqu'à la butée fixe correspondant à la position de jet inversé par l'intermédiaire de l'engrènement de la roue dentée 8 avec le secteur de pignon 9,
(j) à vérifier la position des aubes,
(k) à couper l'alimentation de la butée mobile de manière à interdire le retour intempestif des aubes dans la position de jet direct en cas de rupture du dispositif de verrouillage,
(l) à couper l'alimentation du système de verrouillage pour verrouiller le pied des aubes dans la position de jet inversé,
(m) à couper l'alimentation du moteur électrique.

Le diagramme temporel de la modification de la position des aubes pour le passage d'une phase de décollage vers une phase de croisière est représenté sur la figure 10. Il est similaire à celui de la figure 9 en supprimant toutefois les étapes(g) et (k) du procédé consistant à alimenter, respectivement à couper l'alimentation, de l'actionneur 12 de la butée mobile 20. Cette butée mobile 20 doit en effet rester en place puisque c'est sur cette butée que les aubes doivent être positionnées.

Pour revenir dans une position de jet direct, le processus est semblable. La seule modification concerne la vitesse du champ tournant et le sens du moment magnétique créé par ce champ tournant, de manière, avant l'alimentation du verrou, à maintenir le pied des aubes bloqué contre la butée correspondant à la position en jet inversé et, après l'alimentation du verrou, à provoquer la rotation des aubes de la position de jet inversé jusqu'à la butée fixe correspondant au jet direct.

L'alimentation du moteur électrique n'est nécessaire, en principe, que quelques secondes, correspondant au temps nécessaire à la modification de la position des aubes. Cependant, il est particulièrement avantageux de disposer d'une sécurité supplémentaire permettant de bloquer les aubes sur une butée mécanique en cas de défaillances simultanées du système de verrouillage. Cette sécurité est obtenue en déclenchant l'alimentation du moteur électrique lorsque un problème de pannes simultanées est détecté, de manière à créer un champ magnétique tournant pour bloquer en permanence les aubes sur une butée mécanique.
De cette manière, le système de verrouillage est muni de trois niveaux de sécurité, à savoir, un verrou permettant de bloquer les aubes en rotation autour de leur axe longitudinal, une butée mobile empêchant les aubes de passer d'une position de jet direct vers une position de jet inversé, et le champ magnétique tournant permettant de bloquer les aubes en cas de ruptures simultanées du verrou et de la butée mobile.

La présente invention n'est pas limitée au mode de réalisation précisément décrit, notamment le nombre de positions d'aube intermédiaires n'est pas limité et il est possible de disposer plusieurs butées mobiles affectées chacune à des positions d'aubes différentes. Par ailleurs, le système de verrouillage peut maintenir un ou plusieurs pieds d'aube suivant la fiabilité requise.

## Revendications

1. Dispositif de variation du pas des aubes d'un rotor d'une turbomachine, les aubes étant montées sur un disque entraîné en rotation par un arbre de la turbomachine et ayant chacune un pied pouvant pivoter autour d'un axe longitudinal de l'aube, caractérisé en ce qu'il comporte des moyens d'actionnement du changement du pas des aubes et des moyens de verrouillage du pied des aubes, les moyens d'actionnement comportant un moteur électrique ayant un stator bobiné fixe (5) et un rotor (7) fixé sur l'arbre (2) de la turbomachine, le rotor (7) ne possédant aucune liaison électrique avec le stator et étant solidaire d'une roue dentée (8) sur laquelle sont engrenés des secteurs de pignons (9) solidaires du pied (4) de chaque aube (1), les moyens de verrouillage comportant un actionneur électromécanique (13) solidaire de l'arbre (2) et alimenté en énergie électrique par l'intermédiaire d'un transformateur tournant (25).

2. Dispositif selon la revendication 1, caractérisé en ce que l'ensemble constitué par un pignon (9), la roue dentée (8), et le rotor (7) du moteur électrique a un débattement angulaire maximal délimité par deux butées fixes (10,11), ces butées fixes correspondant à deux positions d'aube extrêmes.

3. Dispositif selon la revendication 2, caractérisé en ce qu'il comporte au moins une butée mobile (20) correspondant à au moins une position d'aube intermédiaire entre les deux positions extrêmes.

4. Dispositif selon la revendication 3, caractérisé en ce que la butée mobile (20) est un électro-aimant (12) alimenté par l'intermédiaire d'un transformateur tournant.

5. Dispositif selon la revendication 4, caractérisé en ce que l'électro-aimant (12) constituant la butée mobile (20) comporte dans un boîtier solidaire de l'arbre (2), une bobine à l'intérieur de laquelle une tige métallique (22) est mobile en translation.

6. Dispositif selon la revendication 5, caractérisé en ce que un ressort de rappel est disposé autour de la tige (22).

7. Dispositif selon l'une quelconque des revendications précédentes, caractérisé en ce que l'actionneur électromécanique (13) est associé à un verrou (14) destiné à maintenir le pied des aubes dans une position déterminée et en ce qu'il comporte, dans un boîtier solidaire de l'arbre (2), une bobine à l'intérieur de laquelle est disposée une tige métallique (15) mobile en translation, la tige (15) étant solidaire du verrou (14).

8. Dispositif selon la revendication 7, caractérisé en ce qu'il comporte en outre des moyens de contrôle de la position de la tige (22) de l'électro-aimant (12) constituant la butée mobile (20) et/ou des moyens de contrôle de la position de la tige (15) de l'actionneur (13) du verrou (14), les moyens de contrôle de position comportant pour chacune des tiges (22, 15), un détecteur de position (17) associé à un dispositif de contrôle de position (28) alimenté en énergie électrique par l'intermédiaire d'au moins un transformateur tournant lorsque la tige (22,15) est rétractée.

9. Dispositif selon la revendication 8, caractérisé en ce que le détecteur de position (17) est un contact de fin de course.

10. Dispositif selon la revendication 9, caractérisé en ce que l'alimentation en énergie électrique du dispositif de contrôle de position (28) est effectuée par l'intermédiaire de deux transformateurs tournants (25, 29), le premier transformateur tournant (25) comportant un bobinage primaire fixe (18) relié à un dispositif d'alimentation en énergie électrique (26) et un bobinage secondaire (19) fixé sur l'arbre (2), le deuxième transformateur tournant (29) comportant un bobinage primaire (30) fixé sur l'arbre (2) et relié par l'intermédiaire du détecteur de position (17) aux boites du bobinage secondaire (19) du premier transformateur tournant (25), et un bobinage secondaire (31) relié au dispositif de contrôle de position (28).

11. Dispositif selon la revendication 9, caractérisé en ce que l'alimentation en énergie électrique du dispositif de contrôle de position (28) est effectuée par l'intermédiaire d'un seul transformateur tournant (32) comportant deux enroulements indépendants, le premier enroulement comportant un bobinage primaire (33) relié à un dispositif d'alimentation en énergie électrique (26) et un bobinage secondaire (34) relié à un oscillateur (37) par l'intermédiaire du détecteur de position (17), le deuxième enroulement n'ayant que quelques spires et comportant un bobinage primaire (35) relié à l'oscillateur (37) et un bobinage secondaire relié au dispositif de contrôle de position (28).

12. Procédé de commande du dispositif de variation du pas des aubes d'un rotor d'une turbomachine selon l'une quelconque des revendications précédentes, caractérisé en ce que, pour passer d'une position de verrouillage sur une première butée vers une position de verrouillage sur une deuxième butée, il consiste :
- à effectuer une mesure de la vitesse de rotation de l'arbre (2) de la turbomachine et à contrôler la position du verrou (14),
- à alimenter le moteur électrique,
- à créer entre le stator (5) et le rotor (7) du moteur électrique, un champ magnétique tournant à une vitesse différente de celle de l'arbre (2), et impliquant un moment magnétique capable de bloquer les aubes sur la première butée afin de faciliter le déverrouillage et de maintenir les aubes dans la même position pendant la manoeuvre de déverrouillage,
- à alimenter l'actionneur (13) du verrou (14) pour libérer le pied (4) des aubes (1),
- à modifier la vitesse du champ tournant de manière à inverser le sens du moment magnétique et provoquer la rotation des aubes autour de leur axe longitudinal de la première butée jusqu'à la deuxième butée,
- à couper l'alimentation du système de verrouillage pour verrouiller le pied des aubes sur la deuxième butée,
- à couper l'alimentation du moteur électrique.

13. Procédé selon la revendication 12, caractérisé en ce qu'il consiste en outre pour passer d'une position de verrouillage sur la première butée fixe vers une position de verrouillage sur la deuxième butée fixe :
- à contrôler la position de la butée mobile (20) avant d'alimenter le moteur électrique,
- à alimenter l'actionneur (12) de la butée mobile (20) avant d'alimenter l'actionneur (13) du verrou (14),
- à couper l'alimentation de la butée mobile (20) après la rotation des aubes sur la deuxième butée fixe de manière à interdire le retour intempestif des aubes dans la position initiale en cas de rupture du système de verrouillage.

14. Procédé selon l'une quelconque des revendications 12 ou 13, caractérisé en ce qu'il consiste, en cas de pannes simultanées du verrou (14) et des butées mobiles (20), à alimenter le moteur électrique de manière à créer un champ magnétique tournant pour bloquer en permanence les aubes sur une butée mécanique.

## Claims

1. A device for varying the pitch of the blades of a turbomachine rotor, the blades being disposed on a disc rotated by a shaft of the turbomachine, each blade having a root pivotable around a longitudinal axis of the blade, characterised in that it comprises actuating means for changing blade pitch and means for locking the blade root, the actuating means comprising an electric motor having a wound stationary stator (5) and a rotor (7) secured to the turbomachine shaft (2) and having no electrical connection to the stator and being rigidly secured to a toothed wheel (8) meshing with pinion sectors (9) rigidly secured to the root (4) of each blade (1), the locking means comprising an electromechanical actuator (13) rigidly secured to the turbomachine shaft (2) and electrically energised by way of a rotating transformer (25).

2. A device according to claim 1, characterised in that the system embodied by a pinion (9), the toothed wheel (8) and the rotor (7) of the electric motor has a maximal angular movement defined by two fixed abutments (10, 11) corresponding to two blade end positions.

3. A device according to claim 2, characterised in that it comprises at least one movable abutment (20) corresponding to at least one intermediate blade position between the two end positions.

4. A device according to claim 3, characterised in that the movable abutment (20) is an electromagnet (12) energised by way of a rotating transformer.

5. A device according to claim 4, characterised in that the electromagnet (12) comprises in a casing rigidly secured to the shaft (2) a winding in which a metal rod (22) is movable in translation.

6. A device according to claim 5, characterised in that a return spring is disposed around the rod (22).

7. A device according to any of the previous claims, characterised in that the electromechanical actuator (13) is associated with a bolt (14) for retaining the blade root in a predetermined position and comprises in a casing rigidly secured to the shaft (2) a winding in which a metal rod (15) movable in translation is disposed, the rod (15) being rigidly secured to the bolt (14).

8. A device according to claim 7, characterised in that it also comprises means for monitoring the position of the rod (22) of the electromagnet (12) serving as the movable abutment (20) and/or means for monitoring the position of the rod (15) of the bolt actuator (13), the position-monitoring means comprising for each of the rods (22, 15) a position detector (17) associated with a position monitor (28) electrically energised by way of at least one rotating transformer when the rod (22, 15) is in its retracted position.

9. A device according to claim 8, characterised in that the position detector (17) is a limit contact.

10. A device according to claim 9, characterised in that the position monitor (28) is electrically energised by way of two rotating transformers (25, 29), the first (25) of which comprises a fixed primary winding (18) connected to an electric power supply (26) and a secondary winding (19) secured to the shaft (2) whereas the second (29) comprises: a primary winding (30) secured to the shaft (2) and connected by way of the position detector (17) to the casings of the secondary winding (19) of the first rotating transformer (25); and a secondary winding (31) connected to the position monitor (28).

11. A device according to claim 9, characterised in that the position monitor (28) is electrically energised by way of a single rotating transformer (32) comprising two independent sets of windings, the first of which comprises a primary winding (33) connected to an electric power supply (26) and a secondary winding (34) connected to an oscillator (37) by way of the position detector (17), the second set of windings having only a few turns and comprising a primary winding (35) connected to the oscillator (37) and a secondary winding connected to the position monitor (28).

12. A process for controlling the device for varying the pitch of the blades of a turbomachine rotor according to any of the previous claims, characterised in that to change over from a locked position on a first abutment to a locked position on a second abutment it resides in:
measuring the speed of rotation of the turbomachine shaft (2) and monitoring the position of the bolt (14);
energising the electric motor;
producing between the stator (5) and rotor (7) of the electric motor a magnetic field rotating at a different speed from the shaft (2) and producing a magnetic torque able to lock the blades on the first abutment for unlocking and to retain the blades in the same position during the unlocking operation;
energising the bolt actuator (13) to release the blade root (4);
altering the speed of rotation of the rotating field so that the direction of the magnetic torque is reversed and the blades rotate around their longitudinal axis from the first abutment as far as the second abutment;
interrupting the energisation of the locking system to lock the blade root on the second abutment, and
interrupting the energisation of the electric motor.

13. A process according to claim 12, characterised in that it also comprises, for changing over from a locked position on the first abutment to a locked position on the second abutment:
monitoring the position of the movable abutment (20) before energising the electric motor;
energising the actuator (12) of the movable abutment (20) before energising the bolt actuator (13), and
interrupting the energisation of the movable abutment (20) after rotation of the blades on to the secondary stationary abutment so as to prevent the accidental return of the blades to their initial position in the event of a malfunctioning of the locking system.

14. A process according to claim 12 or 13, characterised in that it comprises, in the event of simultaneous malfunctionings of the bolt (14) and movable abutments (20), energising the electric motor to produce a rotating magnetic field in order to lock the blades permanently on a mechanical abutment.

## Patentansprüche

1. Vorrichtung zur Verstellung des Blattanstellwinkels eines Rotors einer Turbomaschine, wobei die Blätter auf einer Scheibe angebracht sind, die durch eine Welle der Turbomaschine angetrieben wird, und jeweils einen Fuß aufweisen, der um eine Längsachse des Blattes verstellt werden kann,
**dadurch gekennzeichnet,**
daß sie Betätigungsmittel zur Verstellung des Blattanstellwinkels sowie zur Feststellung des Fußes der Blätter aufweist, wobei die Betätigungsmittel einen elektrischen Motor mit einem festen gewickelten Stator (5) und einen Rotor (7) aufweisen, der an der Welle (2) der Turbomaschine angebracht ist, wobei der Rotor (7) keinerlei elektrische Verbindung mit dem Stator aufweist und mit einem Ritzel (8) fest verbunden ist, in das Zahnradabschnitte (9) eingreifen, die mit dem Fuß (4) jedes Blatts (1) fest verbunden sind, wobei die Feststellmittel einen elektromechanischen Aktuator (13) aufweisen, der mit der Welle (2) fest verbunden ist, und mittels eines Drehtransformators (25) mit elektrischer Energie versorgt wird.

2. Vorrichtung nach Anspruch 1,
**dadurch gekennzeichnet,**
daß die Anordnung, die durch ein Zahnrad (9), ein Ritzel (8) und den Rotor (7) des Elektromotors gebildet wird, einen maximalen Winkel-Verstellbereich aufweist, der durch zwei feste Anschläge (10, 11) begrenzt ist, wobei diese festen Anschläge zwei Endpositionen des Blattes entsprechen.

3. Vorrichtung nach Anspruch 2,
**dadurch gekennzeichnet,**
daß sie wenigstens einen bewegbaren Anschlag (20) entsprechend wenigstens einer Zwischenstellung des Blattes zwischen den beiden Endstellungen aufweist.

4. Vorrichtung nach Anspruch 3,
**dadurch gekennzeichnet,**
daß der bewegbare Anschlag (20) ein Elektromagnet (12) ist, der mittels eines Drehtransformators versorgt wird.

5. Vorrichtung nach Anspruch 4,
**dadurch gekennzeichnet,**
daß der Elektromagnet (12), der den bewegbaren Anschlag (20) bewegt, in einer mit der Welle (2) festen Dose eine Spule aufweist, in deren Inneres ein metallischer Stab (22) verschoben werden kann.

6. Vorrichtung nach Anspruch 5,
**dadurch gekennzeichnet,**
daß um den Stab (22) eine Rückkoppelfeder vorgesehen ist.

7. Vorrichtung nach einem der vorhergehenden Ansprüche,
**dadurch gekennzeichnet,**
daß der elektromechanische Aktuator (13) einem Riegel (14) zugeordnet ist, der zum Halten des Fußes der Blätter in einer vorbestimmten Position dient, und daß er in einer mit der Welle (2) fest verbundenen Dose eine Spule aufweist, in deren Inneren ein metallischer, in Translation bewegbarer Stab (15) vorgesehen ist, wobei der Stab (15) mit dem Riegel (14) fest verbunden ist.

8. Vorrichtung nach Anspruch 7,
**dadurch gekennzeichnet,**
daß sie weiterhin Mittel zur Steuerung der Position des Stabs (22) des Elektromagnets (12), der den bewegbaren Anschlag (20) bildet, und/oder Mittel zur Steuerung der Position des Stabs (15) des Aktuators (13) des Riegels (14) aufweisen, wobei die Mittel zur Steuerung der Position jeweils für einen der Stäbe (22, 15) einen Positionsdetektor (17) aufweist, der einer Positionssteuervorrichtung (28) zugeordnet ist, die mittels wenigstens eines Drehtransformators mit elektrischer Energie versorgt wird, wenn der Stab (23, 15) zurückgezogen ist.

9. Vorrichtung nach Anspruch 8,
**dadurch gekennzeichnet,**
daß der Positionsdetektor (17) ein Grenztaster ist.

10. Vorrichtung nach Anspruch 9;
**dadurch gekennzeichnet,**
daß die elektrische Energieversorgung der Positions-Steuervorrichtung (28) mittels zwei Drehtransformatoren (25, 29) erfolgt, wobei der erste Drehtransformator (25) eine feste Primärspule (18) aufweist, die mit einer elektrischen Energiezufuhr für Vorrichtungen (26) verbunden ist, und eine fest auf der Welle (2) angebrachte Sekundärspule (19), wobei der zweite Drehtransformator (29) eine fest auf der Welle (2) angebrachte Primärspule (30) aufweist, die mittels des Positionsdetektors (17) mit den Dosen der Sekundärspule (19) des ersten Drehtransformators (25) verbunden ist, und eine Sekundärspule (31), die mit der Positionssteuerung (28) verbunden ist.

11. Vorrichtung nach Anspruch 9,
**dadurch gekennzeichnet,**
daß die elektrische Energieversorgung der Positionssteuervorrichtung (28) mittels eines einzigen Drehtransformators (32) erfolgt, der zwei unabhängige Entwicklungen aufweist, wobei die erste Wicklung eine Primärspule (33) aufweist, die mit einer elektrischen Energiezufuhrvorrichtung (26) verbunden ist, und eine Sekundärspule (34), die mit einem Oszillator (37) mittels des Positionsdetektors (17) verbunden ist, wobei die zweite Wicklung nur wenige Bildungen aufweist und eine Primärspule (35), die mit einem Oszillator (37) verbunden ist, und eine Sekundärspule aufweist, die mit der Positions-Steuervorrichtung (28) verbunden ist.

12. Verfahren zur Steuerung der Vorrichtung zur Verstellung des Blattanstellwinkels eines Rotors einer Turbomaschine, gemäß einem der vorhergehenden Ansprüche,
**dadurch gekennzeichnet,**
daß zum Übergang von einer Feststellposition an einem ersten Anschlag zu einer Feststellposition an einem zweiten Anschlag die folgenden Schritte aufgeführt werden:
- Messung der Drehgeschwindigkeit der Welle (2) der Turbomaschine und Kontrolle der Position des Riegels (14),
- Start des Elektromotors,
- Erzeugung zwischen dem Stator (5) und dem Rotor (7) des Elektromotors eines Dreh-Magnetfelds mit einer Geschwindigkeit, die sie von der der Welle (2) unterscheidet, und Ausübung eines magnetischen Moments, das die Blätter an dem ersten Anschlag blockiert, um die Entriegelung zu erleichtern, und Halten der Blätter in der gleichen Position während des Entriegelungsvorgangs,
- Aktivierung des Aktuators (13) des Riegels (14), um den Fuß (4) der Blätter (1) freizugeben,
- Änderung der Geschwindigkeit des Drehfelds, um die Richtung des magnetischen Moments umzukehren und eine Drehung der Blätter um ihre Längsachse von dem ersten Anschlag bis zu dem zweiten Anschlag hervorzurufen,
- Abstellen des der Versorgung des Verriegelungssystems, um den Fuß der Blätter an dem zweiten Anschlag zu verriegeln, und
- Abstellen der Versorgung des Elektromotors.

13. Verfahren nach Anspruch 12,
**dadurch gekennzeichnet,**
daß es weiterhin für den Übergang von einer ersten Verriegelungsposition an einem ersten festen Anschlag in Richtung einer Verriegelungsposition an einem zweiten festen Anschlag die folgenden Schritte aufweist:
- Kontrolle der Position des bewegbaren Anschlags (20) vor der Aktivierung des Elektromotors,
- Aktivierung des Aktuators (12) des bewegbaren Anschlags (20) vor der Aktivierung des Aktuators (13) des Riegels (14),
- Abstellen der Versorgung des bewegbaren Anschlags (20) nach der Drehung der Blätter an dem zweiten festen Anschlag, um ein ungewolltes Zurückgehen der Blätter in die Ausgangsposition für den Fall eines Bruchs des Verriegelungssystems zu verhindern.

14. Verfahren nach einem der Ansprüche 12 oder 13,
**dadurch gekennzeichnet,**
daß für den Fall eines gleichzeitigen Versagens des Riegels (14) und des bewegbaren Anschlags (20) der Elektromotor aktiviert wird, um ein magnetisches Drehfeld zu erzeugen, um ständig die Blätter an einem mechanischen Anschlag zu blockieren.
